# EUROPÄISCHE PATENTSCHRIFT

(11) **EP 3 837 084 B1**
(45) Veröffentlichungstag und Bekanntmachung des Hinweises auf die Patenterteilung: **16.03.2022**
(21) Anmeldenummer: 19752670.0
(22) Anmeldetag: 02.08.2019
(51) Int. Cl.: B23K 26/03, B23K 26/04, G01B 9/02

(54) **LASERBEARBEITUNGSSYSTEM UND VERFAHREN FÜR DIE BEARBEITUNG EINES WERKSTÜCKS MIT EINEM LASERSTRAHL**
LASER PROCESSING SYSTEM AND METHOD FOR MACHINING A WORKPIECE WITH A LASER BEAM
SYSTÈME DE TRAITEMENT AU LASER ET PROCÉDÉ D'USINAGE D'UNE PIÈCE AVEC UN FAISCEAU LASER

(30) Priorität: 14.08.2018 DE 102018119703
(43) Veröffentlichungstag der Anmeldung: 23.06.2021
(73) Patentinhaber: Precitec GmbH & Co. KG, 76571 Gaggenau-Bad Rotenfels (DE)
(72) Erfinder: SCHÜRMANN, Bert, 76593 Gernsbach (DE)
(74) Vertreter: Ter Meer Steinmeister & Partner
(86) Internationale Anmeldenummer: PCT/EP2019/070903
(87) Internationale Veröffentlichungsnummer: WO 2020/035332

(56) Entgegenhaltungen:
- WO-A1-2018/136622
- DE-A1-102013 015 656
- DE-A1-102014 011 569
- DE-B4-102014 011 569
- US-A1- 2016 039 045

## Beschreibung

Die vorliegende Offenbarung betrifft ein Laserbearbeitungssystem, das für die Bearbeitung eines Werkstücks mit einem Laserstrahl eingerichtet ist, und ein Verfahren für die Bearbeitung eines Werkstücks mit einem Laserstrahl. Die vorliegende Offenbarung betrifft insbesondere einen Laserbearbeitungskopf, z.B. zum Laserschweißen oder Laserschneiden, mit einem optischen Kohärenztomographen zur Abstandsmessung zum Werkstück.

### Stand der Technik

In einer Vorrichtung zur Materialbearbeitung mittels Laser, z.B. in einem Laserbearbeitungskopf etwa zum Laserschweißen oder Laserschneiden, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt.

Für die Lasermaterialbearbeitung, insbesondere für das Laserschneiden oder Laserschweißen, muss der Abstand zwischen Bearbeitungskopf und Werkstückoberfläche bzw. der Abstand zwischen einer am Ende des Bearbeitungskopfes angeordneten Düse und der Werkstückoberfläche konstant gehalten werden. Je konstanter der Abstand während der Bearbeitung gehalten werden kann, desto stabiler läuft der Bearbeitungsprozess. Üblicherweise wird zur Abstandmessung ein kapazitives Messverfahren eingesetzt, bei dem die Werkstückoberfläche und die Oberfläche der Schneiddüse einen Kondensator bilden, der Teil eines Schwingkreises ist. Da das Werkstück auf Massepotenzial liegt, ebenso wie die anderen Teile der Schneidanlage, wie z.B. ein Dreibackenfutter einer Profilschneidanlage, bilden sich jedoch nicht nur zwischen der Schneiddüse und dem Werkstück Feldlinien aus, sondern auch zwischen der Schneiddüse und dem neben der Schneiddüse angeordneten Dreibackenfutter. Je näher die Düse dem Dreibackenfutter kommt, desto größer wird der Einfluss auf das gemessene Abstandssignal. Eine ähnliche Situation ergibt sich beim Schneiden von Teilen aus einer Blechtafel: Oft fallen die vom Laserstrahl ausgeschnittenen Teile nicht aus der Blechtafel heraus, sondern verkanten sich und können dadurch aus der Blechtafel herausragen. Dadurch kann auch beim Flachbettschneiden, bei dem es kein Dreibackenfutter gibt, die kapazitive Abstandmessung beeinflusst werden. Im anderen Fall können die ausgeschnittenen Teile aus der Blechtafel herausfallen. Wenn dann ein Schnitt sehr nahe an einer ausgeschnittenen Kontur verläuft, kann die kapazitive Abstandmessung beeinflusst werden, da die Kondensatorfläche Löcher enthält.

Bei kapazitiven Messverfahren besteht daher eine große Seitenempfindlichkeit bei der Abstandmessung zu einer Werkstückoberfläche unter der Schneiddüse. Damit kann die Abstandsmessung zum Werkstück bei Verwendung eines kapazitiven Messverfahrens fehlerbehaftet sein.

DE 10 2014 011 569 B4 zeigt ein Verfahren zum Messen des Abstands zwischen einem Werkstück und einem Bearbeitungskopf einer Laserbearbeitungsvorrichtung mittels optischer Kohärenztomographie.

WO 2018/136622 A1, welche als nächstliegender Stand der Technik angesehen wird, offenbart ein System und ein Verfahren, bei denen interferometrische Abstandsmessung im Zusammenhang mit Laser-Materialbearbeitung, beispielsweise Schweißen, verwendet wird.

DE 10 2013 015 656 A1 und D4 US 2016/0039045 A1 offenbaren Verfahren und Vorrichtungen zum Messen einer Eindringtiefe eines Laserstrahls in ein Werkstück bei der Lasermaterialbearbeitung.

### Offenbarung der Erfindung

Es ist eine Aufgabe der vorliegenden Offenbarung, einen Bearbeitungskopf für ein Laserbearbeitungssystem, das für die Bearbeitung eines Werkstücks mit einem Laserstrahl eingerichtet ist, und ein Verfahren für die Bearbeitung eines Werkstücks mit einem Laserstrahl anzugeben, die eine präzise und fehlerfreie Abstandsmessung zu einem Werkstück ermöglichen.

Diese Aufgabe wird durch den Gegenstand der unabhängigen Ansprüche gelöst. Vorteilhafte Ausgestaltungen der Erfindung sind in den Unteransprüchen angegeben.

Gemäß einem Aspekt der vorliegenden Offenbarung ist ein Laserbearbeitungssystem das für die Bearbeitung eines Werkstücks mit einem Laserstrahl, vorzugsweise für das Schneiden eines Werkstücks mit einem Laserstrahl angegeben. Das Laserbearbeitungssystem umfasst einen Bearbeitungskopf mit einem Gehäuse, das eine Öffnung für einen Austritt des Laserstrahls aus dem Bearbeitungskopf und wenigstens eine reflektierende Referenz zum Reflektieren eines Messstrahls aufweist. Mit anderen Worten kann die Öffnung derart ausgebildet sein, dass während des Betriebs des Laserbearbeitungssystems der Laserstrahl aus der Öffnung austritt und auf das Werkstück trifft. Die wenigstens eine reflektierende Referenz kann im Gehäuse angeordnet sein. Das Laserbearbeitungssystem umfasst weiterhin eine Messeinrichtung, die dazu eingerichtet ist, den Messstrahl auf die Öffnung und die wenigstens eine reflektierende Referenz zu richten, wobei die Messeinrichtung weiter eingerichtet ist, um basierend auf (i) einem ersten Reflex des optischen Messstrahls von der wenigstens einen reflektierenden Referenz und (ii) wenigstens einem zweiten Reflex des optischen Messstrahls vom Werkstück einen Abstand zwischen dem Bearbeitungskopf (bzw. zwischen einem Endabschnitt des Bearbeitungskopfes) und dem Werkstück zu bestimmen. Der Endabschnitt kann der Teil des Bearbeitungskopfes sein, der die Öffnung aufweist und/oder der dem Werkstück während der Bearbeitung (unmittelbar) gegenüberliegt. Die reflektierende Referenz kann am oder benachbart zum Endabschnitt angeordnet sein. Der optische Messstrahl und der Laserstrahl können im Bearbeitungskopf, zumindest im Bereich der Öffnung, im Wesentlichen parallel zueinander verlaufen, insbesondere koaxial. Mit anderen Worten verlaufen die Strahlachsen des optischen Messstrahls und des Laserstrahls vorzugsweise im Wesentlichen parallel oder koaxial durch die Öffnung. Somit können der optische Messstrahl und der Laserstrahl koaxial und/oder senkrecht auf die Werkstückoberfläche treffen. Der optische Messstrahl kann unter einem Winkel auf die reflektierende Referenz treffen. Der reflektierte Strahl bzw. der erste Reflex kann daher auch nicht parallel bzw. nicht koaxial zum optischen Messstrahl und/oder zum Laserstrahl verlaufen.

Eine Auswerteeinheit der Messeinrichtung ist dazu eingerichtet, um einen Abstand zwischen dem Bearbeitungskopfes und dem Bearbeitungsgrund basierend auf einem dritten Reflex vom Bearbeitungsgrund bzw. vom Bearbeitungspunkt des Laserstrahls zu bestimmen. Bei der Bearbeitung kann es sich um einen Schweißprozess, einen Schneidprozess, Einstichprozess oder Abtragungsprozess handeln, bei dem Material abgetragen wird, um z.B. ein Sackloch auszubilden. Entsprechend kann der Bearbeitungspunkt ein Schweißpunkt, Schneidpunkt, Einstichpunkt oder Abtragungspunkt sein. Anders gesagt kann nicht nur der Abstand zwischen dem Endabschnitt, wie z.B. der Düse, und der Werkstückoberfläche bestimmt werden. Durch Bestimmung des Abstands zwischen der Oberfläche des Werkstücks und dem Bearbeitungsgrund kann beispielsweise eine Bearbeitungstiefe, d.h. eine Schnittspalttiefe, Einstichtiefe, Abtragungstiefe oder Einschweißtiefe, bestimmt werden. Somit können gleichzeitig der Abstand zum Werkstück sowie eine Bearbeitungstiefe bzw. ein Abstand zum Bearbeitungsgrund bestimmt werden. Hierfür wird ein kontinuierlicher Messstrahl mit kreisförmigem Querschnitt und einem Durchmesser größer als ein Durchmesser der Öffnung verwendet, damit sowohl ein erster als auch ein zweiter Reflex sowie ein dritter Reflex entsteht.

Gemäß einem weiteren Aspekt der vorliegenden Offenbarung ist ein Verfahren für die Bearbeitung eines Werkstücks mit einem Laserstrahl angegeben. Das Verfahren umfasst ein Bereitstellen eines Bearbeitungskopfes mit einem Gehäuse, das eine Öffnung für einen Austritt des Laserstrahls aus dem Bearbeitungskopf aufweist; ein Richten des Laserstrahls auf die Öffnung; ein Richten eines optischen Messstrahls auf die Öffnung und wenigstens eine reflektierende Referenz am Gehäuse; und ein Bestimmen eines Abstands zwischen dem Bearbeitungskopf bzw. einem Endabschnitt des Bearbeitungskopfs und dem Werkstück basierend auf (i) einem ersten Reflex des optischen Messstrahls von der wenigstens einen reflektierenden Referenz und (ii) wenigstens einem zweiten Reflex des optischen Messstrahls vom Werkstück. Der optische Messstrahl und der Laserstrahl können im Bearbeitungskopf, zumindest im Bereich der Öffnung, im Wesentlichen parallel zueinander verlaufen. Zusätzlich kann beim Bestimmen des Abstands ein Offset zwischen der wenigstens einen reflektierenden Referenz und dem Endabschnitt berücksichtigt werden. Das Verfahren kann durch den Bearbeitungskopf der vorliegenden Offenbarung implementiert werden. Zudem kann der Bearbeitungskopf eingerichtet sein, um das Verfahren gemäß der vorliegenden Offenbarung auszuführen.

Erfindungsgemäß wird der Abstand zwischen dem Endabschnitt des Bearbeitungskopfs, wie beispielswiese einer Schneiddüse, und dem Werkstück unter Verwendung von mindestens zwei optischen Messignalen, und optional unter Verwendung eines Offsets zwischen der wenigstens einen reflektierenden Referenz und einem Endabschnitt des Bearbeitungskopfes, bestimmt. Dies ermöglicht eine präzise und fehlerfreie Abstandsmessung zum Werkstück. Zudem kann beim Schneiden mit Laserstrahlung der Abstand zwischen dem Bearbeitungskopf, insbesondere der Düse bzw. Schneiddüse, zur Oberfläche des Werkstücks konstant gehalten werden. Aufgrund des konstanten Abstands während des Schneidens läuft der Bearbeitungsprozess stabiler.

Durch einen parallelen oder koaxialen Verlauf des optischen Messstrahls und des Laserstrahls kann zudem eine Genauigkeit der Abstandsbestimmung erhöht werden, insbesondere bei großen Abständen. Denn bei großen Abständen kann ein schräg durch die Öffnung austretender Messstrahl in eine benachbarte ausgeschnittene Kontur in der Blechtafel fallen und somit keine Information über den Abstand zwischen Bearbeitungskopf und Werkstückoberfläche liefern. Ebenso kann ein schräg durch die Öffnung austretender Messstrahl auf ein verkantetes ausgeschnittenes Teil fallen und somit eine falsche Information über den Abstand liefern.

Das Verfahren und das Laserbearbeitungssystem gemäß dieser Aspekte kann folgende bevorzugte Merkmale allein oder in Kombination aufweisen:
In manchen Ausführungsbeispielen verlaufen der optische Messstrahl und der Laserstrahl im Bearbeitungskopf, zumindest im Bereich der Öffnung, koaxial zueinander. Der optische Messstrahl bzw. dessen Strahlachse kann koaxial oder parallel zu einer optischen Achse des Laserbearbeitungskopfes im Bereich der Öffnung sein. Der optische Messstrahl und der Laserstrahl können unterschiedliche Wellenlängen aufweisen. Auf diese Weise können reflektierte Teile des Laserstrahls von Reflexen des optischen Messstrahls unterschieden bzw. getrennt werden.

Vorzugsweise ist die Messeinrichtung eingerichtet, um den Abstand zwischen dem Endabschnitt und dem Werkstück basierend auf einer Differenz zwischen einem Abstand aus dem wenigstens einen zweiten Reflex und einem Abstand aus dem ersten Reflex unter Berücksichtigung des Offsets zu berechnen. Der Endabschnitt kann ein äußerstes Ende des Bearbeitungskopfs sein, das dem Werkstück gegenüberliegt. Der Abstand zwischen dem Endabschnitt des Beärbeitungskopfs und einer Oberfläche des Werkstücks kann in einigen Ausführungsformen so definiert sein, dass der Bearbeitungskopf, z.B. die Schneiddüse, die Oberfläche des Werkstücks berührt, wenn der Abstand zwischen dem Endabschnitt und der Oberfläche des Werkstücks in etwa Null ist, und die Oberfläche des Werkstücks nicht berührt (also ein Spalt vorhanden ist), wenn der Abstand größer als Null ist. Hierdurch kann sichergestellt werden, dass während eines Bearbeitungsprozesses ein Spalt zwischen der Schneiddüse und dem Werkstück vorhanden ist. Zudem ist eine Kollisionserkennung zwischen Düse und Werkstück möglich.

Vorzugsweise umfasst die wenigstens eine reflektierende Referenz eine reflektierende Fläche und/oder eine reflektierende Kante und/oder einen reflektierenden Radius. Insbesondere kann die wenigstens eine reflektierende Referenz so ausgerichtet sein, dass der auf die wenigstens eine reflektierende Referenz auftreffende optische Messstrahl in sich zurückreflektiert wird. Vorzugsweise befindet sich die wenigstens eine reflektierende Referenz in unmittelbarer Nähe der Öffnung, und insbesondere in einem Umfangsbereich der Öffnung. Die wenigstens eine reflektierende Referenz kann die Öffnung zumindest teilweise, und vorzugsweise vollständig, umgeben. Die wenigstens eine reflektierende Referenz kann einen definierten Reflex des auf die wenigstens eine reflektierende Referenz treffenden optischen Messstrahls bereitstellen, wodurch eine präzise Abstandsmessung ermöglicht wird.

Vorzugsweise ist die wenigstens eine reflektierende Referenz auf der Innenfläche des Gehäuses angeordnet oder durch die Innenfläche des Gehäuses bereitgestellt. Beispielsweise kann die Innenfläche des Gehäuses dazu eingerichtet sein, den optischen Messstrahl zu reflektieren. Damit kann die wenigstens eine reflektierende Referenz einfach und ohne das Vorsehen einer zusätzlichen Komponente im Bearbeitungskopf bereitgestellt werden.

Vorzugsweise umfasst der Bearbeitungskopf weiter eine Düse, insbesondere eine Schneiddüse, die zumindest einen Teil des Gehäuses bildet und die wenigstens eine reflektierende Referenz und/oder die Öffnung umfasst. Beispielsweise ist die wenigstens eine reflektierende Referenz an der Innenfläche der Düse ausgebildet, die die Öffnung enthält. Insbesondere kann die wenigstens eine reflektierende Referenz an einem Umfang oder Umfangsbereich der Öffnung angeordnet sein und kann die Öffnung zumindest teilweise, und vorzugsweise vollständig, umgeben. Durch die Anordnung der wenigstens einen reflektierenden Referenz nahe am Endabschnitt des Bearbeitungskopfes kann eine Genauigkeit der Abstandsmessung weiter verbessert werden. So kann beispielsweise ein Einfluss einer optischen Weglängenänderung im Bearbeitungskopf minimiert werden.

Vorzugsweise umfasst die Messeinrichtung einen optischen Kohärenztomographen. Der optische Messstrahl kann von einer Lichtquelle des Kohärenztomographen erzeugt werden. Der Kohärenztomograph kann einen Detektor aufweisen, der dazu eingerichtet ist, eine Überlagerung des ersten und des zweiten Reflexes des optischen Messstrahles zu erfassen und daraus den Abstand zur wenigstens einen reflektierenden Referenz bzw. zum Werkstück zu bestimmen. Zusätzlich kann der Kohärenztomograph einen Referenzarm aufweisen, wobei der Detektor dazu eingerichtet ist, eine Überlagerung des ersten und/oder des zweiten Reflexes des optischen Messstrahles mit einem im Referenzarm reflektierten Strahl zu erfassen. Der Abstand kann einer Weglänge des Reflexes zwischen der wenigstens einen reflektierenden Referenz bzw. dem Werkstück und einem Referenzpunkt des Referenzarms entsprechen.

Vorzugsweise ist der optische Messstrahl ein einziger optischer Messstrahl, kann also ein sogenannter kontinuierlicher Strahl sein. Der optische Messstrahl weist vorzugsweise einen kreisförmigen Strahlquerschnitt auf. So kann auch ohne komplizierte Strahlformungsoptiken o.ä. mit einem einfachen Strahlprofil mittels optischer Kohärenztomographie (OCT) der Abstand zum Werkstück und optional zusätzlich der Abstand zum Bearbeitungsgrund bestimmt werden.

Ein Durchmesser des optischen Messstrahls kann zumindest größer als eine Bearbeitungsbreite, z.B. eine Schweißbreite bzw. Schnittspaltbreite, sein. Dadurch kann sichergestellt werden, dass zumindest ein Teil des optischen Messstrahls auf die Werkstückoberfläche außerhalb des Schnittspalts bzw. des Bearbeitungspunkts trifft. Beispielsweise kann der einzige (kontinuierliche) optische Messstrahl so groß im Durchmesser sein, dass er die wenigstens eine reflektierende Referenz und die Werkstückoberfläche (und optional in den Bearbeitungspunkt bzw. in den Schnittspalt) trifft. Hierdurch kann eine umfassende Ausleuchtung der reflektierenden Referenz und des Werkstücks erfolgen, wodurch die Abstandsmessung auf einfache Weise mit einer hohen Zuverlässigkeit erfolgen kann.

Der optische Messstrahl ist ein kontinuierlicher Strahl mit einem Durchmesser, der größer als ein Durchmesser der Öffnung des Gehäuses ist. In diesem Fall kann mit einem einfachen optischen Aufbau sowohl ein erster Reflex an der reflektierenden Referenz, ein zweiter Reflex an der Werkstückoberfläche als auch ein dritter Reflex am Bearbeitungspunkt, z.B. vom Bearbeitungsgrund oder vom Einstichsackloch, erhalten werden. Mit anderen Worten lässt sich damit eine Topographie der Umgebung des Bearbeitungspunktes ermitteln. Alternativ kann eine Strahlachse des optischen Messstrahls so bezüglich der Strahlachse des Laserstrahls versetzt sein, dass er sowohl auf die reflektierende Referenz als auch durch die Öffnung trifft. Insbesondere kann die Strahlachse des optischen Messstrahls in diesem Fall exzentrisch zur Öffnung angeordnet sein, aber trotzdem parallel zur Strahlachse des Laserstrahls verlaufen.

Mit Abstand kann die kürzeste Verbindungsstrecke zwischen zwei Elementen bezeichnet werden.

### Kurze Beschreibung der Zeichnungen

Ausführungsbeispiele der Offenbarung sind in den Figuren dargestellt und werden im Folgenden näher beschrieben. Es zeigen:
Figur 1 ein Laserbearbeitungssystem mit einem Bearbeitungskopf gemäß Ausführungsformen der vorliegenden Offenbarung,
Figur 2 einen Abschnitt eines Bearbeitungskopfes gemäß einiger Aspekte der vorliegenden Offenbarung,
Figur 3 einen Abschnitt eines Bearbeitungskopfes gemäß weiteren Ausführungsformen der vorliegenden Offenbarung, und
Figur 4 ein Flussdiagramm eines Verfahrens für die Bearbeitung eines Werkstücks mit einem Laserstrahl.

### Ausführungsformen der Offenbarung

Im Folgenden werden, sofern nicht anders vermerkt, für gleiche und gleichwirkende Elemente gleiche Bezugszeichen verwendet.

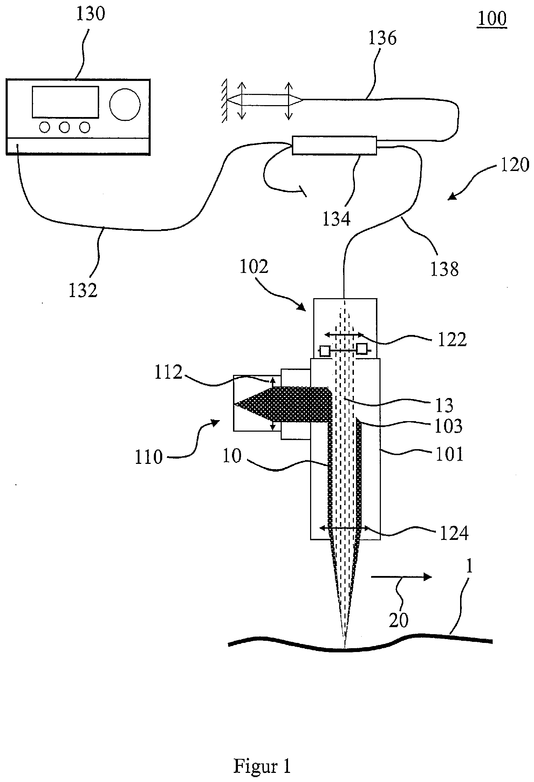

Figur 1 zeigt eine schematische Darstellung eines Laserbearbeitungssystems 100 gemäß Ausführungsformen der vorliegenden Offenbarung. Das Laserbearbeitungssystem 100 umfasst einen Bearbeitungskopf 101, beispielsweise einen Laserschneidkopf.

Das Laserbearbeitungssystem 100 umfasst eine Laservorrichtung 110 zum Bereitstellen eines Laserstrahls 10 (auch als "Bearbeitungsstrahl" oder "Bearbeitungslaserstrahl" bezeichnet) und eine Messeinrichtung zum Messen eines Abstands zwischen einem Werkstück 1 und einem Endabschnitt des Bearbeitungskopfes 101, wie beispielsweise einer Düse. Der Endabschnitt bzw. die Düse weist eine Öffnung auf, durch die der Laserstrahl 10 aus dem Bearbeitungskopf 101 austritt.

Das Laserbearbeitungssystem 100 oder Teile davon, wie beispielsweise der Bearbeitungskopf 101, kann gemäß Ausführungsformen entlang einer Bearbeitungsrichtung 20 bewegbar sein. Die Bearbeitungsrichtung 20 kann eine Schneid- bzw. Schweißrichtung und/oder eine Bewegungsrichtung des Laserbearbeitungssystems 100, wie beispielsweise des Bearbeitungskopfes 101, bezüglich des Werkstücks 1 sein. Insbesondere kann die Bearbeitungsrichtung 20 eine horizontale Richtung sein. Die Bearbeitungsrichtung 20 kann auch als "Vorschubrichtung" bezeichnet werden.

Die Laservorrichtung 110 kann eine Kollimator-Optik 112 zur Kollimation des Laserstrahls 10 aufweisen. Innerhalb des Bearbeitungskopfes 101 wird der Laserstrahl 10 durch eine geeignete Optik 103 um etwa 90° in Richtung des Werkstücks 1 abgelenkt bzw. reflektiert. Die Optik 103, beispielsweise ein halbdurchlässiger Spiegel, kann dazu eingerichtet sein, beispielsweise vom Werkstück 1 zurückreflektiertes Licht zur Messeinrichtung durchtreten zu lassen. Der optische Messstrahl und der Laserstrahl können unterschiedliche Wellenlängen aufweisen, sodass nur zurückreflektiertes Messlicht zur Messeinrichtung gelangt.

Die Messeinrichtung kann einen Kohärenztomographen 120 umfassen oder kann ein Kohärenztomograph 120 sein. Der Kohärenztomograph 120 kann eine Auswerteeinheit 130 mit einer breitbandigen Lichtquelle (z.B. einer Superlumineszenzdiode, SLD) umfassen, die das Messlicht in einen Lichtwellenleiter 132 koppelt. In einem Strahlteiler 134, der vorzugsweise einen Faserkoppler aufweist, wird das Messlicht typischerweise in einen Referenzarm 136 und einen Messarm aufgespalten, der über einen Lichtwellenleiter 138 in den Bearbeitungskopf 101 führt. Der Kohärenztomograph 120 kann ferner eine Kollimator-Optik 122 umfassen, die eingerichtet ist, um einen optischen Messstrahl 13 zu kollimieren. Die Kollimator-Optik 122 kann in den Bearbeitungskopf 101 integriert sein. Beispielsweise kann der Bearbeitungskopf 101 ein Kollimatormodul 102 umfassen, das in den Bearbeitungskopf 101 integriert oder am Bearbeitungskopf 101 montiert ist.

Im Bearbeitungskopf 101 ist ferner eine Fokussier-Optik 124 vorgesehen, die eingerichtet ist, um den Laserstrahl 10 und/oder den optischen Messstrahl 13 auf das Werkstück 1 zu fokussieren. Die Fokussier-Optik 124 kann eine gemeinsame Fokussier-Optik, wie beispielsweise eine Fokuslinse, für den Laserstrahl 10 und den Messstrahl 13 sein.

In einigen Ausführungsformen können der Laserstrahl 10 und der optische Messstrahl 13 zumindest streckenweise parallel oder sogar koaxial verlaufen, und können insbesondere zumindest streckenweise koaxial überlagert sein. Beispielsweise kann der Kohärenztomograph 120 eingerichtet sein, um den optischen Messstrahl 13 in einen Strahlengang der Laservorrichtung 110 einzukoppeln. Die Zusammenführung des optischen Messstrahls 13 und des Laserstrahl 10 kann nach der Kollimator-Optik 122 und vor der Fokussier-Optik 124 erfolgen. Alternativ können die Strahlengänge des Messstrahls 13 und des Laserstrahls 10 weitgehend getrennt geführt und erst nach der Fokussier-Optik 124 vor der Öffnung des Laserbearbeitungskopfes 101 zusammengeführt werden. Die Strahlachsen des Laserstrahls 10 und des Messstrahls 13 können auf Höhe der Öffnung 212 bzw. des Endabschnitts 216 parallel zueinander oder sogar koaxial verlaufen, und stehen bevorzugt senkrecht auf der Werkstückoberfläche.

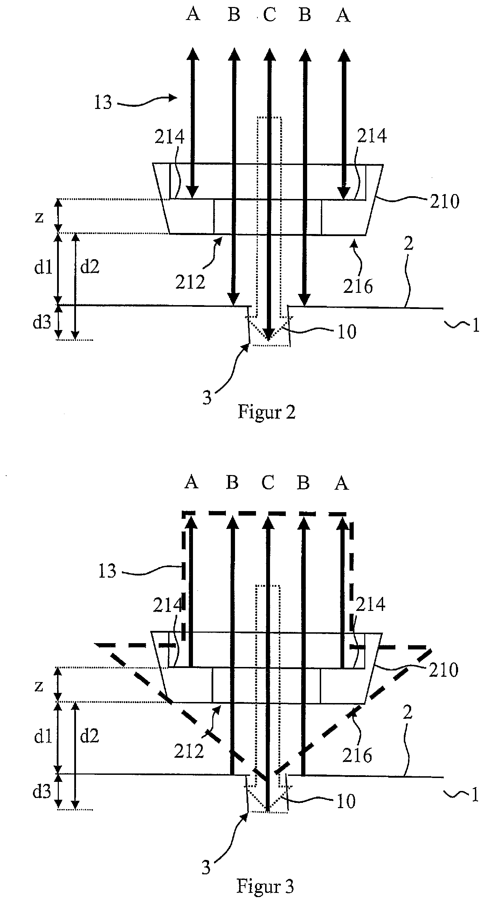

Das hier beschriebene Prinzip zur Abstandsmessung beruht auf dem Prinzip der optischen Kohärenztomographie, die sich unter Zuhilfenahme eines Interferometers die Kohärenzeigenschaften von Lichts zunutze macht. Zur Abstandsmessung wird der optische Messstrahl 13 auf eine Oberfläche 2 des Werkstücks 1 gelenkt. Das von der Oberfläche zurückreflektierte Messlicht (d.h. die unter Bezugnahme auf die Figuren 2 und 3 beschriebenen Reflexe) wird durch die Fokussier-Optik 124 auf die Austritts-/Eintrittsfläche des Lichtwellenleiters 138 abgebildet, im Faserkoppler 134 mit dem zurückreflektierten Licht aus dem Referenzarm 136 überlagert und anschließend zurück in die Auswerteeinheit 130 gelenkt. Das überlagerte Licht enthält Informationen über den Weglängenunterschied zwischen dem Referenzarm 136 und dem Messarm. Diese Informationen werden in der Auswerteeinheit 130 ausgewertet, wodurch der Benutzer Informationen über den Abstand zwischen der Oberfläche des Werkstücks und dem Bearbeitungskopf 101 erhält. Vorzugsweise ist jedoch gemäß Ausführungsformen dieser Offenbarung kein Referenzarm 136 in der Messeinrichtung vorgesehen, sondern anstelle eines aus dem Referenzarm 136 zurückreflektierten Lichts wird ein Teilstrahl bzw. Teil des Messstrahls, der an einer reflektierenden Referenz im Bearbeitungskopf 101 zurückreflektiert wird, als Referenz für den vom Werkstück zurückreflektierten Teilstrahl bzw. Teil des Messstrahls verwendet.

Figur 2 zeigt einen Abschnitt des Bearbeitungskopfs des Laserbearbeitungssystems gemäß einiger Aspekte der vorliegenden Offenbarung.

Der Bearbeitungskopf umfasst ein Gehäuse 210, das eine Öffnung 212 für einen Austritt des Laserstrahls 10 aus dem Bearbeitungskopf aufweist. Die Öffnung 212 kann beispielsweise die Öffnung einer Schneiddüse sein. Durch die Öffnung 212 tritt während des Betriebs des Laserbearbeitungssystems der Laserstrahl 10 aus der Öffnung 212 aus und trifft auf das Werkstück 1. Wenigstens eine reflektierende Referenz 214 ist an einer Innenseite des Gehäuses 210 ausgebildet. Diese reflektierende Referenz 214 kann beispielsweise eine Kante, ein Radius, eine Fläche, eine Kerbe, eine Nut o.ä. sein, die bzw. der dazu eingerichtet ist, einen Teil des Messstrahls 13 zu reflektieren. Der Bearbeitungskopf 101 umfasst weiter eine Messeinrichtung (z.B. den in Figur 1 gezeigten Kohärenztomographen 120), die dazu eingerichtet ist, den optischen Messstrahl 13 auf die Öffnung 212 und die wenigstens eine reflektierende Referenz 214 zu richten. Ein Teil A des optischen Messstrahls 13 wird folglich an der reflektierenden Referenz 214 reflektiert, ein anderer Teil B des optischen Messstrahls 13 tritt durch die Öffnung 212 aus dem Bearbeitungskopf 101 aus und wird an der Werkstückoberfläche 2 reflektiert. Die reflektierten Strahlen werden mit dem Licht aus dem Referenzarm 136 überlagert und zurück zur Messeinheit bzw. Auswerteeinheit 130 geführt, um den Abstand zur reflektierenden Referenz 214 sowie den Abstand zur Werkstückoberfläche 2 und daraus dann den Abstand (dl+z) zwischen der reflektierenden Referenz 214 und der Werkstückoberfläche 2 zu bestimmen. Der Referenzarm 136 ist jedoch optional. Es ist auch möglich, lediglich die reflektierten Strahlen bzw. Teilstrahlen A und B zu überlagern, um den Abstand (dl+z) zwischen der reflektierenden Referenz 214 und der Werkstückoberfläche 2 zu bestimmen.

Unter Berücksichtigung eines Offsets z, d.h. des Abstands zwischen der reflektierenden Referenz 214 zum Endabschnitt 216 des Laserbearbeitungskopfes 101 bzw. zur Düsenunterkante, kann daher der Abstand dl zwischen Werkstückoberfläche 2 und Laserbearbeitungskopf 101 bestimmt werden. Der Offset z (auch als "vorbestimmter Abstand" bezeichnet) kann zwischen einem Punkt oder Bereich der reflektierenden Referenz 214, die den Ursprung des ersten Reflexes A bildet, und dem Endabschnitt 216, wie beispielsweise einem dem Werkstück 1 gegenüberliegenden bzw. die Öffnung 212 aufweisenden Ende des Bearbeitungskopfes, definiert sein. Der Offset z kann ein im wesentlichen unveränderlicher Abstand sein, der durch die strukturelle Auslegung beispielsweise der Düse, die einstückig ausgebildet sein kann, festgelegt bzw. vorbestimmt ist. Allerdings kann die reflektierende Referenz 214 in der Öffnung 212 kurz oberhalb des Endabschnitts 216 angeordnet sein, so dass der Offset sehr klein und somit vernachlässigbar ist.

Die Messeinrichtung bzw. die Auswerteeinheit 130 ist daher eingerichtet, um basierend zumindest auf (i) einem ersten Reflex A des optischen Messstrahls 130 von der reflektierenden Referenz 214 und (ii) einem zweiten Reflex B des optischen Messstrahls 13 vom Werkstück 1 einen Abstand dl zwischen dem Endabschnitt 216 und dem Werkstück 1 zu bestimmen. Zusätzlich (falls erforderlich) kann dabei der Offset z zwischen der reflektierenden Referenz 214 und dem Endabschnitt 216 des Bearbeitungskopfes berücksichtigt werden. Damit kann eine präzise und fehlerfreie Abstandsmessung zum Werkstück 1 erfolgen. Zudem kann während des Bearbeitungsprozesses der Abstand dlzwischen dem Bearbeitungskopf und dem Werkstück 1 konstant gehalten und eine Kollision zwischen dem Bearbeitungskopf und dem Werkstück 1 verhindert werden.

Der optische Weg des Messstrahls hängt u.a. von dem Brechungsindex des Mediums ab, durch das der Messstrahl hindurchläuft. Beispielsweise kann der Bearbeitungskopf einen Bereich umfassen, wie etwa zwischen einem Schutzglas des Bearbeitungskopfes und der Düse, der mit Schneidgas gefüllt ist. Da Druck und Temperatur des Schneidgases je nach Prozessführung stark variieren können, ändert sich je nach Prozess die optische Weglänge für den Messstrahl. Die dadurch verursachte optische Weglängenänderung kann daher kompensiert werden, indem Messstrahl und Reflex bzw. Referenzstrahl dasselbe Gas-gefüllte Volumen durchlaufen.

Der Messstrahl 13 kann mehrere getrennte Teilstrahlen umfassen, die auf unterschiedliche Flächen treffen, d.h. auf die reflektierende Referenz 214 im Bearbeitungskopf und auf die Werkstückoberfläche 2, oder erfindungsgemäß einen einzigen Strahl so groß im Durchmesser, dass ein Teil auf die reflektierende Referenz 214 und ein anderer Teil auf die Werkstückoberfläche 2 trifft. Zusätzlich kann der Messstrahl 13 einen Teilstrahl umfasssen beziehungsweise umfasst erfindungsgemäß der einzige Strahl einen Teil, der in den Bearbeitungspunkt bzw. in den Schnittspalt trifft. Die Messeinrichtung bzw. die Auswerteeinheit 130 bestimmt eine Bearbeitungstiefe d3, d.h. den Abstand eines reflektierenden Bearbeitungsgrunds zur Werkstückoberfläche 2, und kann einen Abstand d2 zwischen Bearbeitungsgrund und Bearbeitungskopf 101 bzw. Endabschnitt 216 des Bearbeitungskopfes 101 bestimmen. Auch hier kann optional der Offset z zwischen der wenigstens einen reflektierenden Referenz 214 und dem Endabschnitt 216 des Bearbeitungskopfes berücksichtigt werden.

Im in der Figur 2 gezeigten Beispiel treffen verschiedene Messstrahlen auf unterschiedliche Flächen, umfassend zumindest die reflektierende Referenz 214 und die Werkstückoberfläche. Insbesondere weist der optische Messstrahl 13 hier zwei oder mehrere Teilstrahlen auf, wobei wenigstens ein erster Teilstrahl der zwei oder mehreren Teilstrahlen auf die wenigstens eine reflektierende Referenz 214 gerichtet ist und wenigstens ein zweiter Teilstrahl der zwei oder mehreren Teilstrahlen auf die Öffnung 212 gerichtet ist. Um den Messstrahl 13 in verschiedene Teilstrahlen aufzuteilen, können optische Elemente, z.B. ein optischer Keil im kollimierten Strahl, ein Strahlteiler, ein elektrooptischer Modulator (EOM), ein akustooptischer Modulator (AOM), eine Ablenkeinheit bzw. Scanner, verwendet werden.

Beispielsweise kann der wenigstens eine erste Teilstrahl den ersten Reflex A erzeugen, und der wenigstens eine zweite Teilstrahl kann den zweiten Reflex B erzeugen. Mehrere zweite Teilstrahlen können unabhängig voneinander auf unterschiedliche Bereiche des Werkstück 1 gerichtet werden. Der zweite Reflex kann zum Beispiel einen Reflex B von der Werkstückoberfläche 2 umfassen.

Figur 3 zeigt einen Abschnitt des Bearbeitungskopfs des Laserbearbeitungssystems gemäß weiteren Ausführungsformen der vorliegenden Offenbarung. Die unter Bezugnahmen auf die Figur 2 beschriebenen Aspekte können analog bei der in der Figur 3 gezeigten Ausführungsform verwendet werden. Daher ist im Folgenden lediglich der Unterschied erläutert.

Im in der Figur 3 gezeigten Beispiel ist ein einziger Messstrahl so groß im Durchmesser, dass er die reflektierende Referenz 214, die Werkstückoberfläche 2 und in den Schnittspalt 3 trifft. Beispielsweise ist der optische Messstrahl 13 ein einziger Messstrahl, der einen Durchmesser aufweist, der größer als ein Durchmesser der Öffnung 212 des Gehäuses 210 bzw. der Düse ist.

Typischerweise ist die Messeinrichtung eingerichtet, um den Abstand dl zwischen dem Endabschnitt 216 und dem Werkstück 1 basierend auf einer Differenz zwischen einem Abstand bestimmt aus dem zweiten Reflex B und einem Abstand bestimmt aus dem ersten Reflex A unter Berücksichtigung des Offsets z zu berechnen. Der Abstand aus dem ersten Reflex A und dem zweiten Reflex B kann bezüglich einer Referenz der Messeinrichtung bestimmt werden. Beispielsweise können die Abstände aus dem ersten Reflex A und dem zweiten Reflex B jeweilige Weglängen oder Weglängenunterschiede der Reflexe bezüglich der Referenz der Messeinrichtung angeben. Wie oben erläutert, ist jedoch eine Referenz der Messeinrichtung, wie etwa das im Referenzarm 136 reflektierte Licht, nicht unbedingt erforderlich, sondern es ist auch möglich, lediglich basierend auf dem ersten Reflex A und dem zweiten Reflex B den Weglängenunterschied und somit den Abstand (d1+z) zu bestimmen. In einer beispielhaften Ausführungsform kann der Abstand dl zwischen dem Endabschnitt 216 und der Werkstückoberfläche 2 berechnet werden durch einen Abzug des Abstands aus dem ersten Reflex A (und optional des Offsets z) vom Abstand aus dem Reflex B. Ähnlich kann der Abstand d2 zwischen dem Endabschnitt 216 und dem Bearbeitungsgrund berechnet werden durch einen Abzug des Abstands aus dem ersten Reflex A (optional korrigiert um den Offset z) vom Abstand aus dem Reflex C. Der Abstand d3 zwischen der Oberfläche 2 des Werkstücks 1 und dem Bearbeitungsgrund kann beispielweise durch einen Abzug des Abstands aus dem Reflex B vom Abstand aus dem Reflex C berechnet werden.

Der Endabschnitt 216 kann ein äußerstes Ende des Bearbeitungskopfs sein, das dem Werkstück 1 direkt gegenüberliegt. Der Abstand dl zwischen dem Endabschnitt 216 des Bearbeitungskopfs und der Oberfläche 2 des Werkstücks 1 kann dabei so definiert sein, dass der Bearbeitungskopf, z.B. die Schneiddüse, die Oberfläche 2 des Werkstücks 1 berührt, wenn der Abstand dl zwischen dem Endabschnitt 216 und der Oberfläche 2 des Werkstücks 1 in etwa Null ist, und die Oberfläche 2 des Werkstücks 1 nicht berührt (also ein Spalt mit der Breite dl vorhanden ist), wenn der Abstand dl größer als Null ist.

In einigen Ausführungsformen umfasst (oder ist) die wenigstens eine reflektierende Referenz 214 eine reflektierende Fläche und/oder eine reflektierende Kante und/oder einen reflektierenden Radius. Insbesondere kann die reflektierende Referenz 214 so ausgerichtet sein, dass der auf die wenigstens eine reflektierende Referenz 214 auftretende Messstrahl 13 in sich zurückreflektiert wird. Vorzugsweise befindet sich die reflektierende Referenz 214 in unmittelbarer Nähe der Öffnung 212, sodass eine Berücksichtigung des Offsets z vernachlässigbar sein kann.

Typischerweise ist die wenigstens eine reflektierende Referenz 214 auf der Innenfläche des Bearbeitungskopfes 101 bzw. des Gehäuses 210 angeordnet oder durch die Innenfläche des Bearbeitungskopfes 101 bzw. des Gehäuses 210 bereitgestellt. Beispielsweise kann die Innenfläche des Gehäuses 210 dazu eingerichtet sein, den Messstrahl 13 zu reflektieren. In einigen Ausführungsformen umfasst der Bearbeitungskopf weiter eine Düse, insbesondere eine Schneiddüse, die das Gehäuse 210 und die wenigstens eine reflektierende Referenz 214 umfasst. Beispielsweise ist die reflektierende Referenz 214 an der Innenfläche der Düse ausgebildet, die die Öffnung 212 enthält. Die Düse kann abnehmbar am Bearbeitungskopf 101 montiert sein.

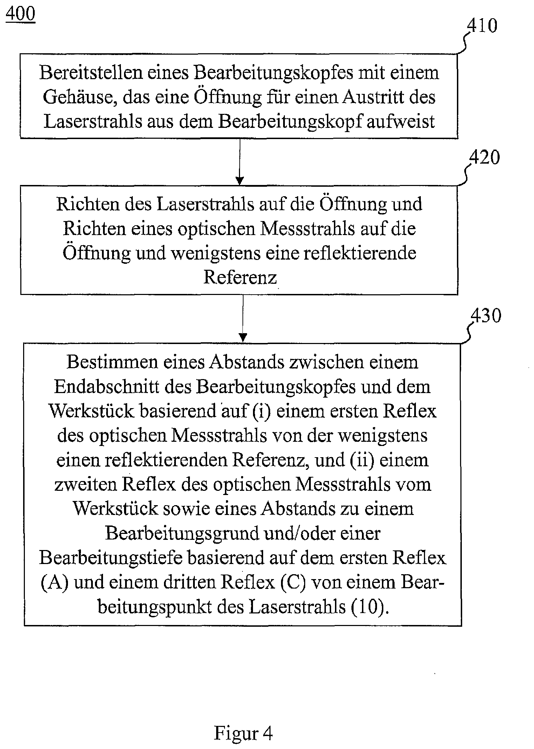

Figur 4 zeigt ein Flussdiagramm eines Verfahrens 400 für die Bearbeitung eines Werkstücks mit einem Laserstrahl. Das Verfahren 400 kann durch den Bearbeitungskopf bzw. das Laserbearbeitungssystem der vorliegenden Offenbarung implementiert werden. Zudem kann der Bearbeitungskopf eingerichtet sein, um das Verfahren 400 gemäß der vorliegenden Offenbarung auszuführen.

Das Verfahren 400 umfasst im Block 410 ein Bereitstellen eines Bearbeitungskopfes 101 mit einem Gehäuse 210, das eine Öffnung 212 für einen Austritt des Laserstrahls aus dem Bearbeitungskopf 101 aufweist. Im Block 420 wird der Laserstrahl 10 durch die Öffnung 212 auf die Werkstückoberfläche 2 gerichtet. Außerdem wird ein Messstrahl 13 sowohl durch die Öffnung 212 auf die Werkstückoberfläche 2 als auch auf wenigstens eine reflektierende Referenz 214 am Gehäuse 210 gerichtet. Vorzugsweise werden der Laserstrahl 10 und der Messstrahl 13 gleichzeitig auf die jeweiligen Flächen gerichtet. Das Verfahren umfasst im Block 430 weiter ein Bestimmen eines Abstands zwischen einem Endabschnitt 216 des Bearbeitungskopfs 101 und der Werkstückoberfläche 2 basierend auf (i) einem ersten Reflex A des optischen Messstrahls 13 von der reflektierenden Referenz 214, und (ii) wenigstens einem zweiten Reflex B des optischen Messstrahls von der Werkstückoberfläche 2. Optional kann der Offset z zwischen der reflektierenden Referenz 214 und dem Endabschnitt 216 berücksichtigt werden.

Erfindungsgemäß befindet sich im Bearbeitungskopf, beispielsweise in einer Düse eines Schneidkopfes, eine Referenzfläche, -kante oder -radius, an der/dem einer von mehreren optischen Messstrahlen oder ein Teil eines optischen Messstrahls in die Signalauswertungseinheit zurückreflektiert wird. Ein anderer von den mehreren optischen Messstrahlen oder ein anderer Teil des optischen Messstrahls trifft auf die Werkstückoberfläche und wird von dort ebenfalls in die Signalauswertungseinheit zurückreflektiert. Es ergeben sich mindestens zwei Messignale, aus deren Differenz die Abstände zwischen der Düse und der Werkstückoberfläche, der Werkstückoberfläche und dem Bearbeitungsgrund (d.h. die Bearbeitungstiefe) und/oder der Düse und dem Bearbeitungsgrund berechnet werden können.

Dies ermöglicht eine präzise und fehlerfreie Abstandsmessung zum Werkstück. Durch Berücksichtigung eines von der Werkstückoberfläche reflektierten Strahls und eines Strahls, der von einer Referenz in Nähe der Austrittsöffnung des Bearbeitungskopfes reflektiert wird, können Änderungen in der optischen Weglänge, z.B. aufgrund Brechzahländerungen durch Druckschwankungen innerhalb des Bearbeitungskopfes oder Erwärmung von optischen Elementen, kompensiert werden. Eine parallele Ausrichtung des Laserstrahls und des Messstrahls und/oder eine Ausrichtung des Messstrahls senkrecht zur Werkstückoberfläche kann ferner die Genauigkeit der Abstandsmessung gerade bei großen Abständen zwischen Werkstückoberfläche und Bearbeitungskopf erhöhen. Zudem kann beim Schneiden mit Laserstrahlung der Abstand zwischen dem Bearbeitungskopf, insbesondere der Düse bzw. Schneiddüse, zur Oberfläche des Werkstücks konstant gehalten werden. Aufgrund des konstanten Abstands während des Schneidens läuft der Bearbeitungsprozess stabiler.

## Patentansprüche

1. Laserbearbeitungssystem (100) zur Bearbeitung eines Werkstücks (1) mit einem Laserstrahl (10), umfassend:
einen Bearbeitungskopf (101) mit einem Gehäuse (210), das eine Öffnung (212) für einen Austritt des Laserstrahls (10) aus dem Bearbeitungskopf (101) und wenigstens eine reflektierende Referenz (214) zum Reflektieren eines Messstrahls aufweist; und
eine Messeinrichtung (120) umfassend eine Auswerteeinheit (130) und eingerichtet, um einen optischen Messstrahl (13) durch die Öffnung (212) auf das Werkstück (1) und auf die reflektierende Referenz (214) zu richten, wobei der optische Messstrahl (13) durch die Öffnung (212) im Wesentlichen parallel zum Laserstrahl (10) verläuft und ein kontinuierlicher Messstrahl mit kreisförmigem Querschnitt ist, wobei ein Durchmesser des optischen Messstrahls (13) größer als ein Durchmesser der Öffnung (212) des Gehäuses (210) ist, um gleichzeitig einen ersten Reflex (A) des optischen Messstrahls (13) von der reflektierenden Referenz (214), einen zweiten Reflex (B) des optischen Messstrahls (13) vom Werkstück (1) und einem dritten Reflex (C) des optischen Messstrahls (13) von einem Bearbeitungspunkt des Laserstrahls (10) zu erhalten,
wobei die Auswerteeinheit (130) eingerichtet ist, um basierend auf dem ersten Reflex (A) und auf dem zweiten Reflex (B) einen Abstand (d1) zwischen dem Bearbeitungskopf (101) und dem Werkstück (1) zu bestimmen, sowie um basierend auf dem ersten Reflex (A) und dem dritten Reflex (C) einen Abstand zu einem Bearbeitungsgrund zu bestimmen.

2. Laserbearbeitungssystem (100) nach Anspruch 1, wobei die Messeinrichtung (120) eingerichtet ist, um unter Berücksichtigung eines vorbekannten Offsets (z) zwischen der reflektierenden Referenz (214) und einem die Öffnung (212) umfassenden Endabschnitt (216) des Bearbeitungskopfes (101) den Abstand (d1) zwischen dem Endabschnitt (216) und dem Werkstück (1) zu bestimmen.

3. Laserbearbeitungssystem (100) nach Anspruch 1 oder 2, wobei die reflektierende Referenz (214) im Gehäuse und/oder benachbart zur Öffnung (212) angeordnet ist.

4. Laserbearbeitungssystem (100) nach einem der vorausgehenden Ansprüche, wobei der optische Messstrahl (13) koaxial zum Laserstrahl (10) durch die Öffnung (212) gerichtet ist.

5. Laserbearbeitungssystem (100) nach einem der vorausgehenden Ansprüche, wobei das Gehäuse (210) eine Düse umfasst, die die Öffnung (212) und die reflektierende Referenz (214) umfasst.

6. Laserbearbeitungssystem (100) nach einem der vorausgehenden Ansprüche, wobei die Messeinrichtung (120) einen optischen Kohärenztomographen umfasst.

7. Laserbearbeitungssystem (100) nach einem der vorausgehenden Ansprüche, wobei die Messeinrichtung (120) weiter eingerichtet ist, um den ersten Reflex (A) des optischen Messstrahls (13) von der reflektierenden Referenz (214) und den zweiten Reflex (B) des optischen Messstrahls (13) vom Werkstück (1) zu überlagern.

8. Verfahren (400) für die Bearbeitung eines Werkstücks (1) mit einem Laserstrahl (10), umfassend:
Bereitstellen (410) eines Bearbeitungskopfes (101) mit einem Gehäuse (210), das eine Öffnung (212) für einen Austritt des Laserstrahls (10) aus dem Bearbeitungskopf (101) und wenigstens eine reflektierende Referenz (214) zum Reflektieren eines Messstrahls aufweist;
Richten (420) eines optischen Messstrahls (13) durch die Öffnung (212) auf das Werkstück (1) und auf die reflektierende Referenz (214), wobei der optische Messstrahl (13) zumindest teilweise parallel zum Laserstrahl (10) verläuft und ein kontinuierlicher Messstrahl mit kreisförmigem Querschnitt ist, wobei ein Durchmesser des optischen Messstrahls (13) größer als ein Durchmesser der Öffnung (212) des Gehäuses (210) ist, um gleichzeitig einen ersten Reflex (A) des optischen Messstrahls (13) von der wenigstens einen reflektierenden Referenz (214), einen zweiten Reflex (B) des optischen Messstrahls (13) vom Werkstück (1) und einem dritten Reflex (C) des optischen Messstrahls (13) von einem Bearbeitungspunkt des Laserstrahls (10) zu erhalten;
und Bestimmen (430) eines Abstands (d1) zwischen dem Bearbeitungskopf (101) und dem Werkstück (1) basierend auf dem ersten Reflex (A) und auf dem zweiten Reflex (B) sowie eines Abstands zu einem Bearbeitungsgrund basierend auf dem ersten Reflex (A) und dem dritten Reflex (C).

9. Verfahren (400) nach Anspruch 8, ferner aufweisend den Schritt:
Überlagern des ersten Reflexes (A) des optischen Messstrahls (13) von der reflektierenden Referenz (214) und des zweiten Reflexes (B) des optischen Messstrahls (13) vom Werkstück (1).

10. Verfahren (400) nach Anspruch 8 oder 9, wobei der optische Messstrahl (13) koaxial zum Laserstrahl (10) durch die Öffnung (212) gerichtet wird.

## Claims

1. A laser machining system (100) for machining a workpiece (1) using a laser beam (10), comprising:
a machining head (101) with a housing (210) having an opening (212) for emitting said laser beam (10) from said machining head (101) and at least one reflective reference (214) for reflecting a measurement beam; and
a measuring device (120) comprising an evaluation unit (130) and configured to direct an optical measurement beam (13) through said opening (212) onto said workpiece (1) and onto said reflective reference (214), said optical measurement beam (13) passing through said opening (212) substantially in parallel to said laser beam (10) and wherein said optical measurement beam (13) is a continuous measurement beam having a circular cross-section, wherein a diameter of said optical measurement beam (13) is greater than a diameter of said opening (212) of said housing (210) in order to simultaneously obtain a first reflection (A) of the optical measurement beam (13) from said reflective reference (214), a second reflection (B) of the optical measurement beam (13) from said workpiece (1), and a third reflection (C) of the optical measurement beam (13) from a machining point of said laser beam (10),
wherein said evaluation unit (130) is configured to determine a distance (d1) between said machining head (101) and said workpiece (1) based on said first reflection (A) and on said second reflection (B), and to determine a distance to a machining ground based on said first reflection (A) and said third reflection (C).

2. The laser machining system (100) according to claim 1, wherein said measuring device (120) is configured to determine said distance (d1) between said end portion (216) and said workpiece (1) while taking into account a known offset (z) between said reflective reference (214) and an end portion (216) of said machining head (101) including said opening (212).

3. The laser machining system (100) according to claim 1 or 2, wherein said reflective reference (214) is disposed within the housing and/or adjacent to said opening (212).

4. The laser machining system (100) according to one of the preceding claims, wherein said optical measurement beam (13) is directed coaxially with said laser beam (10) through said opening (212).

5. The laser machining system (100) according to one of the preceding claims, wherein said housing (210) comprises a nozzle which includes said opening (212) and said reflective reference (214).

6. The laser machining system (100) according to one of the preceding claims, wherein said measuring device (120) comprises an optical coherence tomograph.

7. The laser machining system (100) according to one of the preceding claims, wherein said measuring device (120) is further configured to superpose the first reflection (A) of the optical measurement beam (13) from the reflective reference (214) and the second reflection (B) of the optical measurement beam (13) from the workpiece (1).

8. A method (400) for machining a workpiece (1) using a laser beam (10), comprising:
providing (410) a machining head (101) with a housing (210) having an opening (212) for emitting said laser beam (10) from said machining head (101) and at least one reflective reference (214) for reflecting a measurement beam;
directing (420) an optical measurement beam (13) through said opening (212) onto said workpiece (1) and onto said reflective reference (214), said optical measurement beam (13) being at least partially parallel to said laser beam (10) and a continuous measurement beam having a circular cross-section, wherein a diameter of said optical measurement beam (13) is greater than a diameter of said opening (212) of said housing (210) in order to simultaneously obtain a first reflection (A) of the optical measurement beam (13) from said at least one reflective reference (214), a second reflection (B) of the optical measurement beam (13) from said workpiece (1), and a third reflection (C) of the optical measurement beam (13) from a machining point of said laser beam (10); and
determining (430) a distance (d1) between said machining head (101) and said workpiece (1) based on said first reflection (A) and on said second reflection (B), and a distance to a machining ground based on said first reflection (A) and said third reflection (C).

9. The method of claim 8, further comprising the step of:
superposing the first reflection (A) of the optical measurement beam (13) from the reflective reference (214) and the second reflection (B) of the optical measurement beam (13) from the workpiece (1).

10. The method (400) of claim 8 or 9, wherein the optical measurement beam (13) is directed coaxially to the laser beam (10) through the opening (212).

## Revendications

1. Système d'usinage au laser (100) destiné à usiner une pièce (1) en utilisant un faisceau laser (10), comprenant :
une tête d'usinage (101) munie d'un boîtier (210) comportant une ouverture (212) pour une sortie du faisceau laser (10) par la tête d'usinage (101) et au moins une référence réfléchissante (214) pour réfléchir un faisceau de mesure ; et
un dispositif de mesure (120) incluant une unité d'évaluation (130) et configuré pour diriger un faisceau de mesure optique (13) à travers l'ouverture (212) sur la pièce (1) et sur la référence réfléchissante (214), dans lequel le faisceau de mesure optique (13) passe à travers l'ouverture (212) de manière sensiblement parallèle au faisceau laser (10) et est un faisceau de mesure continu à section circulaire, dans lequel un diamètre du faisceau de mesure optique (13) est plus grand qu'un diamètre de l'ouverture (212) du boîtier (210) afin d'obtenir simultanément une première réflexion (A) du faisceau de mesure optique (13) à partir de la référence réfléchissante (214), une deuxième réflexion (B) du faisceau de mesure optique (13) à partir de la pièce (1) et une troisième réflexion (C) du faisceau de mesure optique (13) à partir d'un point d'usinage du faisceau laser (10),
dans lequel l'unité d'évaluation (130) est configurée pour déterminer, sur la base de la première réflexion (A) et de la deuxième réflexion (B), une distance (d1) entre la tête d'usinage (101) et la pièce (1), ainsi que pour déterminer, sur la base de la première réflexion (A) et de la troisième réflexion (C), une distance par rapport à un fond d'usinage.

2. Système d'usinage au laser (100) selon la revendication 1, dans lequel le dispositif de mesure (120) est configuré pour déterminer, en tenant compte d'un décalage (z) connu entre la référence réfléchissante (214) et une partie d'extrémité (216) de la tête d'usinage (101) incluant l'ouverture (212), la distance (d1) entre la partie d'extrémité (216) et la pièce (1).

3. Système d'usinage au laser (100) selon la revendication 1 ou 2, dans lequel la référence réfléchissante (214) est agencée dans le boîtier et/ou adjacente à l'ouverture (212).

4. Système d'usinage au laser (100) selon l'une des revendications précédentes, dans lequel le faisceau de mesure optique (13) est dirigé coaxialement au faisceau laser (10) à travers l'ouverture (212).

5. Système d'usinage au laser (100) selon l'une des revendications précédentes, dans lequel le boîtier (210) inclut une buse incluant l'ouverture (212) et la référence réfléchissante (214).

6. Système d'usinage au laser (100) selon l'une des revendications précédentes, dans lequel le dispositif de mesure (120) comprend un tomographe à cohérence optique.

7. Système d'usinage au laser (100) selon l'une des revendications précédentes, dans lequel le dispositif de mesure (120) est en outre configuré pour superposer la première réflexion (A) du faisceau de mesure optique (13) par la référence réfléchissante (214) et la deuxième réflexion (B) du faisceau de mesure optique (13) par la pièce (1).

8. Procédé (400) destiné à usiner une pièce (1) en utilisant un faisceau laser (10), comportant les étapes consistant à :
fournir (410) une tête d'usinage (101) munie d'un boîtier (210) comportant une ouverture (212) pour une sortie du faisceau laser (10) par la tête d'usinage (101) et au moins une référence réfléchissante (214) pour réfléchir un faisceau de mesure ;
diriger (420) un faisceau de mesure optique (13) à travers l'ouverture (212) sur la pièce (1) et sur la référence réfléchissante (214), dans lequel le faisceau de mesure optique (13) s'étend de manière au moins partiellement parallèle au faisceau laser (10) et est un faisceau de mesure continu à section circulaire, dans lequel un diamètre du faisceau de mesure optique (13) est plus grand qu'un diamètre de l'ouverture (212) du boîtier (210) afin d'obtenir simultanément une première réflexion (A) du faisceau de mesure optique (13) par la référence réfléchissante (214), une deuxième réflexion (B) du faisceau de mesure optique (13) par la pièce (1) et une troisième réflexion (C) du faisceau de mesure optique (13) par un point d'usinage du faisceau laser (10) ;
et déterminer (430) une distance (d1) entre la tête d'usinage (101) et la pièce (1) sur la base de la première réflexion (A) et de la deuxième réflexion (B), ainsi qu'une distance par rapport à un fond d'usinage sur la base de la première réflexion (A) et de la troisième réflexion (C).

9. Procédé (400) selon la revendication 8, comportant en outre l'étape consistant à :
superposer la première réflexion (A) du faisceau de mesure optique (13) à partir de la référence réfléchissante (214) et la deuxième réflexion (B) du faisceau de mesure optique (13) à partir de la pièce (1).

10. Procédé (400) selon la revendication 8 ou 9, dans lequel le faisceau de mesure optique (13) est dirigé coaxialement au faisceau laser (10) à travers l'ouverture (212).
